# EUROPEAN PATENT APPLICATION

(11) **EP 4 640 783 A1**
(43) Date of publication of application: **29.10.2025**
(21) Application number: 23906879.4
(22) Date of filing: 14.12.2023
(51) Int. Cl.: C09J 175/06, B32B 27/40, B65D 65/40, C09J 11/06, C09J 11/08

(54) **TWO-PART CURABLE ADHESIVE, MULTILAYER BODY AND PACKAGE**

(30) Priority: 20.12.2022 JP 2022203108
(71) Applicant: DIC Corporation, Tokyo 174-8520 (JP)
(72) Inventor: TERAMURA, Misato, Tokyo 174-8520 (JP); HARANO, Chika, Ichihara-shi, Chiba 290-8585 (JP); MIHARA, Takashi, Ichihara-shi, Chiba 290-8585 (JP); OKADA, Katsuhiko, Tokyo 174-8520 (JP); WATANABE, Toshio, Tokyo 174-8520 (JP); KIMURA, Ryoji, Tokyo 174-8520 (JP); KAI, Hidetomo, Sakura-shi, Chiba 285-8668 (JP); MIYAWAKI, Atsuhisa, Sakura-shi, Chiba 285-8668 (JP); INAGAKI, Sho, Sakura-shi, Chiba 285-8668 (JP)
(74) Representative: Kraus & Lederer PartGmbB
(86) International application number: PCT/JP2023/044775
(87) International publication number: WO 2024/135514

(57) **Abstract**

Provided are a two-component curable adhesive containing a polyol composition (X) containing a polyester polyol compound (A) and a polyisocyanate composition (Y) containing a polyisocyanate compound (B), the polyester polyol compound (A) having a number average molecular weight in a range of 500 to 20,000, and either or both of the polyester polyol compound (A) and the polyisocyanate compound (B) being a reaction product of an aliphatic alcohol having a quaternary carbon atom and having trivalent or more hydroxy groups; a laminate; and a packaging material.

## Description

### Technical Field

The present invention relates to a two-component curable adhesive for lamination and relates to a laminate and a packaging material having biodegradability and recyclable by an alkali treatment liquid.

### Background Art

Since most synthetic resins do not decompose easily in the natural environment, the degradation of the natural environment by synthetic resins has become a problem. For example, discarded synthetic resins are broken or scraped by the sun's ultraviolet rays and waves in the ocean, eventually becoming microplastics that destroy and pollute the environment for animals and plants in the ocean. In response to such a social issue of global environmental degradation caused by the mass disposal of synthetic resins, there is a growing demand for a group of sustainable products (packaging materials, films, and the like) made from recyclable materials or resins having biodegradability in various environments (seawater, fresh water, soil, compost, and the like).

Conventional general packaging materials are often laminates with metal foil such as aluminum foil or metal vapor-deposited films and plastic films such as polyethylene, polypropylene, polyvinyl chloride, polyester, and nylon laminated in a multilayer manner using a two-component curable adhesive for lamination containing a polyol composition and a polyisocyanate composition (refer to PTL 1, for example). Not only plastic films, but also polyols, polyisocyanates, and their cured products are all synthetic resins, and ideas to separate and reuse these synthetic resins in waste or to provide them with degradability in the natural environment (biodegradability) are urgent matters.

Meanwhile, at present, national and local governments operate differently on whether to separate and reuse synthetic resins in waste or to bury them in the soil in the hope of their biodegradability. Furthermore, consumers who use packaging materials often discard them without determining whether laminated packaging materials after use (to be discarded) are reusable or biodegradable. Thus, there is a need for laminated packaging materials that are reusable and biodegradable.

As a two-component curable adhesive for lamination containing a polyol composition and a polyisocyanate composition showing biodegradability, for example, an adhesive is known containing a polyester polyol as a polymer of a polyester polyol (AB) as a reaction product of a hydroxy group component (A) containing a diol (a) having a branched structure and a carboxylic acid component (B) containing an aliphatic dicarboxylic acid having 2 to 12 carbon atoms (b) and having a specific number average molecular weight, a lactide (C), and a cyclic monomer (D) (refer to PTL 2, for example).

As a method for separating and recovering a laminated film that can easily separate a laminated film laminated with a reactive adhesive mixed in plastic composite waste into monolayer films, for example, containing a compound having an acidic group in the used reactive adhesive is known (refer to PTL 3, for example).

### Citation List

### Patent Literature

PTL 1: Japanese Unexamined Patent Application Publication No. 2014-101422
PTL 2: Japanese Unexamined Patent Application Publication No. 2022-166901
PTL 3: WO 2020/66652

### Summary of Invention

### Technical Problem

An object of the present invention is to provide a two-component curable adhesive for lamination having sufficient performance as a laminating adhesive for packaging materials and having excellent biodegradability and detachability when immersed in an aqueous alkali solution and a laminate and a packaging material having biodegradability and recyclable with an alkali treatment liquid obtained by using the adhesive.

### Solution to Problem

The inventors of the present invention have found that a two-component curable adhesive containing a polyol composition (X) containing a specific polyester polyol compound (A) and a polyisocyanate composition (Y) containing a polyisocyanate compound (B) achieves the above object.

That is, the present invention provides a two-component curable adhesive containing a polyol composition (X) containing a polyester polyol compound (A) and a polyisocyanate composition (Y) containing a polyisocyanate compound (B), the polyester polyol compound (A) having a number average molecular weight in a range of 500 to 20,000, and either or both of the polyester polyol compound (A) and the polyisocyanate compound (B) being a reaction product of an aliphatic alcohol having a quaternary carbon atom and having trivalent or more hydroxy groups.

The present invention also provides a laminate including a first base material, a second base material, and an adhesive layer disposed between the first base material and the second base material, the adhesive layer being a cured coating film of the two-component curable adhesive described above.

The present invention also provides a packaging material including the laminate described above.

The present invention also provides a method for recycling a laminate, the method including a step of immersing a laminate including a first base material, a second base material, and an adhesive layer disposed between the first base material and the second base material, the adhesive layer being a cured coating film of the two-component curable adhesive described above in a peeling liquid to separate the laminate into layers, and a step of recovering the separated layers.

### Advantageous Effects of Invention

The present invention can provide a two-component curable adhesive for lamination having sufficient performance as a laminating adhesive for packaging materials and having excellent biodegradability and detachability when immersed in an aqueous alkali solution and provide a laminate having biodegradability and recyclable with an alkali treatment liquid obtained by using the adhesive. Description of Embodiments

### <Adhesive>

The adhesive of the present invention is a two-component curable adhesive containing a polyol composition (X) containing a polyester polyol compound (A) and a polyisocyanate composition (Y) containing a polyisocyanate compound (B), the polyester polyol compound (A) having a number average molecular weight in a range of 500 to 20,000, and either or both of the polyester polyol compound and the polyisocyanate compound (B) being a reaction product of an aliphatic alcohol having a quaternary carbon atom and having trivalent or more hydroxy groups. The following describes the adhesive of the present invention in detail.

### (Polyol Composition (X))

### (Polyester Polyol Compound (A))

The polyol composition (X) used in the adhesive of the present invention contains the polyester polyol compound (A).

The polyester polyol compound (A) has a number average molecular weight in a range of 500 to 20,000. Being within this range provides excellent degradability under composting conditions. The range is in particular more preferably 2,000 to 10,000.

The number-average molecular weight in the present specification is a value measured by gel permeation chromatography (GPC) under the following conditions.

### Measurement apparatus: HLC-8320GPC manufactured by Tosoh Corporation

Column: TSKgel 4000HXL, TSKgel 3000HXL, TSKgel 2000HXL, and TSKgel 1000HXL manufactured by Tosoh Corporation
Detector: RI (differential refractometer)
Data processing: Multi Station GPC-8020 model II manufactured by Tosoh Corporation
Measurement conditions: Column temperature: 40°C
   Solvent: Tetrahydrofuran
   Flow rate: 0.35 ml/minute
Standard: Monodispersed polystyrene
Sample: A 0.2%-by-mass tetrahydrofuran solution in terms of resin solid content filtered through a microfilter (100 µl)

Examples of the polyester polyol compound (A) used in the present invention include the following:
a polyester polyol (1) as reaction products of polyesters obtained by a ring-opening polymerization reaction of cyclic ester compounds such as propiolactone, butyrolactone, ε-caprolactone, σ-valerolactone, and β-methyl-σ-valerolactone and aliphatic polyhydric alcohols such as glycol, glycerin, trimethylolpropane, and pentaerythritol as raw materials;
a polyester polyol (2) obtained by reacting bifunctional polyols such as glycol, dimer diols, and bisphenol and polyvalent carboxylic acids as raw materials;
a polyester polyol (3) obtained by reacting trifunctional or tetrafunctional aliphatic polyhydric alcohols and polyvalent carboxylic acids as raw materials;
a polyester polyol (4) obtained by reacting bifunctional polyols, the trifunctional or tetrafunctional aliphatic polyhydric alcohols, and polyvalent carboxylic acids as raw materials;
a polyester polyol (5) as polymers of hydroxy acids such as dimethylolpropionic acid and castor oil fatty acids;
polyester polyether polyurethane polyols obtained by reacting at least one of these polyester polyols (1) to (5), polyether polyols, and isocyanate compounds; and
polyester polyurethane polyols obtained by giving a higher molecular weight to the polyester polyols (1) to (5) with isocyanate compounds. The polyester polyol compound (A) may be used individually or in combination.

Examples of the polyol used as the raw material of the polyester polyol compound (A) include glycols such as ethylene glycol, 1,2-propanediol, 1,2-butanediol, 1,2-pentanediol, 1,2-hexanediol, 1,2-heptanediol, 1,2-octanediol, 1,2-nonanediol, 1,2-decanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;
trifunctional or tetrafunctional polyhydric aliphatic alcohols such as glycerin, trimethylolethane, trimethylolpropane, and pentaerythritol;
bisphenols such as bisphenol A, bisphenol F, hydrogenated bisphenol A, and hydrogenated bisphenol F; dimer diols;
polyether polyols obtained by addition polymerizing alkylene oxides such as ethylene oxide, propylene oxide, butylene oxide, styrene oxide, epichlorohydrin, tetrahydrofuran, and cyclohexylene in the presence of polymerization initiators such as the glycols and the trifunctional or tetrafunctional polyhydric aliphatic alcohols;
polyether urethane polyols, in which polyether polyols are further given a higher molecular weight with isocyanate compounds; and
castor oil, dehydrated castor oil, hardened castor oil as a hydrogenated product of castor oil, castor oil-based polyols such as a 5 to 50 mol alkylene oxide adduct of castor oil, and mixtures thereof.

Examples of the polyvalent carboxylic acid used as the raw material of the polyester polyol compound (A) include aromatic polybasic acids such as orthophthalic acid, terephthalic acid, isophthalic acid, phthalic anhydride, 1,4-naphthalene dicarboxylic acid, 2,5-naphthalene dicarboxylic acid, 2,6-naphthalene dicarboxylic acid, 2,3-naphthalene dicarboxylic anhydride, naphthalic acid, trimellitic acid, trimellitic anhydride, pyromellitic acid, pyromellitic anhydride, biphenyldicarboxylic acid, 1,2-bis(phenoxy)ethane-p,p'-dicarboxylic acid, benzophenone tetracarboxylic acid, benzophenone tetracarboxylic dianhydride, sodium 5-sulfoisophthalate, tetrachlorophthalic anhydride, and tetrabromophthalic anhydride;
methyl esters of aromatic polybasic acids such as dimethyl terephthalic acid and dimethyl 2,6-naphthalene dicarboxylic acid;
aliphatic polybasic acids such as malonic acid, succinic acid, succinic anhydride, glutaric acid, adipic acid, pimelic acid, suberic acid, azelaic acid, sebacic acid, fumaric acid, maleic acid, maleic anhydride, and itaconic acid; dimer acid (a liquid fatty acid mainly containing a C36 dibasic acid produced by dimerization of a C18 unsaturated aliphatic acid with a vegetable oil-based fat and oil as a raw material and also containing a monobasic acid and a tribasic acid); alkyl esters of aliphatic polybasic acids such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate; and
alicyclic polybasic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydro phthalic anhydride, 4-methylhexahydrophthalic anhydride, hexahydrophthalic anhydride, cyclohexane-1,2,4-tricarboxylic acid-1,2-anhydride, himic anhydride, and het anhydride, which can be used individually or in combination.

Plyester polyols obtained by reacting aliphatic polyols and aliphatic polyvalent carboxylic acids among the polyols and the polyvalent carboxylic acids are preferably used because they are more biodegradable.

As the aliphatic polyols, 1,2-alkanediols among them are preferred. Examples of the 1,2-alkanediols include 1,2-propanediol, 1,2-butanediol, 1,2-pentanediol, 1,2-hexanediol, 1,2-heptanediol, 1,2-octanediol, 1,2-nonanediol, and 1,2-decanediol described above.

In the present invention, among them, 1,2-propanediol, diethylene glycol, 1,4-butanediol, 1,5-pentanediol, 1,6-hexanediol, 1,9-nonanediol, or 2-methylpropanediol is preferably used, and as the aliphatic polyvalent carboxylic acid, adipic acid is preferred. In particular, combinations of diethylene glycol and adipic acid, 1,2-propanediol and adipic acid, 1,2-butanediol and adipic acid, and 1,2-pentanediol and adipic acid are particularly excellent in biodegradability.

The amount of these aliphatic polyols and aliphatic polyvalent carboxylic acids used is preferably used such that the total weight is 50 to 100% by weight with respect to the total weight of the polyester polyol.

The hydroxyl value of the polyester polyol compound (A) is preferably in a range of 5 to 250 mgKOH/g, more preferably 5 to 100 mgKOH/g or more, and even more preferably 5 to 50 mgKOH/g or less. The hydroxyl value can be measured by the method described in JIS-K0070.

In the present invention, the polyol composition (X) may contain various polyols other than the polyester polyol compound (A).

Examples of such various polyols include polymer polyols selected from polyether polyols, polyurethane polyols, polyether (polyurethane) polyols, acrylic polyols, polycarbonate polyols, polyhydroxyalkanes, castor oil, and mixtures thereof.

Examples of the polyether polyols include polyether polyols obtained by polymerizing oxirane compounds such as ethylene oxide, propylene oxide, butylene oxide, and tetrahydrofuran with, for example, water or low molecular weight polyols such as ethylene glycol, propylene glycol, trimethylolpropane, and glycerin as an initiator. Examples of polyether ester polyols include polyether ester polyols obtained by reacting dibasic acids such as terephthalic acid, isophthalic acid, phthalic anhydride, adipic acid, azelaic acid, sebacic acid, and dimer acid, their dialkyl esters, or mixtures thereof and the above polyether polyols.

Examples of the polyurethane polyols include polyols having a urethane bond in one molecule, and examples thereof include reaction products of polyether polyols with a number average molecular weight of 200 to 20,000 and organic polyisocyanates, in which NCO/OH is preferably less than 1 and more preferably 0.9 or less. For the organic polyisocyanates, polyisocyanate compounds described below, especially diisocyanate compounds can be used.

Examples of the polycarbonate polyols include ones obtained by the reaction of one or two or more glycols selected from ethylene glycol, propylene glycol, 1,4-butanediol, 1,5-pentanediol, 1,6-hexanediol, 3-methyl-1,5-pentanediol, 1,9-nonanediol, 1,8-nonanediol, neopentyl glycol, diethylene glycol, dipropylene glycol, 1,4-cyclohexanediol, 1,4-cyclohexanedimethanol, bisphenol A, and hydrogenated bisphenol A with dimethyl carbonate, diphenyl carbonate, ethylene carbonate, phosgene, or the like.

When the adhesive of the present invention is used as the solventless type, the viscosity of the polyol composition (X) is adjusted to a range suitable for the non-solvent lamination method. As an example, the viscosity at 30 to 80°C is adjusted to a range of 100 to 5,000 mPa·s and more preferably 100 to 3,000 mPa·s. The viscosity of the polyol composition (X) can be adjusted by the skeleton of the polyester polyol compound (A), plasticizers described below, or the like. When the viscosity is adjusted by the skeleton of the polyester polyol compound (A), the viscosity can be reduced by using, for example, polypropylene glycol or polyester polyols obtained by the reaction of aliphatic carboxylic acids and polyols. Alternatively, the viscosity can be increased by using polyester polyols obtained by the reaction of aromatic carboxylic acids and polyols.

When the adhesive of the present invention is used as the solvent type, the viscosity of the polyol composition (X) is adjusted to a viscosity suitable for application by dilution with a solvent.

When the polyester polyol compound (A) used in the present invention is a reaction product of an aliphatic alcohol having a quaternary carbon atom and having trivalent or more hydroxy groups, examples of the aliphatic alcohol having a quaternary carbon atom and having trivalent or more hydroxy groups include trifunctional or tetrafunctional polyhydric alcohols such as trimethylolpropane, trimethylolethane, trimethylolbutane, and pentaerythritol.

Specific examples of the polyester polyol compound (A) as a reaction product of the aliphatic alcohol having a quaternary carbon atom and having trivalent or more hydroxy groups include:
- polyester polyol compounds as reaction products of trimethylolpropane, diethylene glycol, and adipic acid,
- polyester polyol compounds as reaction products of trimethylolpropane, diethylene glycol, adipic acid, and isophthalic acid,
- polyester polyol compounds as reaction products of trimethylolpropane, diethylene glycol, adipic acid, isophthalic acid, and trimellitic anhydride,
- polyester polyol compounds as reaction products of trimethylolpropane, diethylene glycol, adipic acid, isophthalic acid, and pyromellitic anhydride,
- polyester polyol compounds as reaction products of trimethylolpropane, diethylene glycol, adipic acid, isophthalic acid, and phthalic anhydride,
- polyester polyol compounds as reaction products of trimethylolpropane, diethylene glycol, adipic acid, isophthalic acid, and succinic anhydride,
- polyester polyol compounds as reaction products of trimethylolpropane, 1,2-propanediol, and adipic acid,
- polyester polyol compounds as reaction products of trimethylolpropane, 1,2-propanediol, adipic acid, and isophthalic acid,
- polyester polyol compounds as reaction products of trimethylolpropane, 1,2-propanediol, adipic acid, isophthalic acid, and trimellitic anhydride,
- polyester polyol compounds as reaction products of trimethylolpropane, 1,2-propanediol, adipic acid, isophthalic acid, and pyromellitic anhydride,
- polyester polyol compounds as reaction products of trimethylolpropane, 1,2-propanediol, adipic acid, isophthalic acid, and phthalic anhydride,
- polyester polyol compounds as reaction products of trimethylolpropane, 1,2-propanediol, adipic acid, isophthalic acid, and succinic anhydride,
- polyester polyol compounds as reaction products of trimethylolpropane, diethylene glycol, 1,2-propanediol, and adipic acid,
- polyester polyol compounds as reaction products of trimethylolpropane, diethylene glycol, 1,2-propanediol, adipic acid, and isophthalic acid,
- polyester polyol compounds as reaction products of trimethylolpropane, diethylene glycol, 1,2-propanediol, adipic acid, isophthalic acid, and trimellitic anhydride,
- polyester polyol compounds as reaction products of trimethylolpropane, diethylene glycol, 1,2-propanediol, adipic acid, isophthalic acid, and pyromellitic anhydride,
- polyester polyol compounds as reaction products of trimethylolpropane, diethylene glycol, 1,2-propanediol, adipic acid, isophthalic acid, and phthalic anhydride,
- polyester polyol compounds as reaction products of trimethylolpropane, diethylene glycol, 1,2-propanediol, adipic acid, isophthalic acid, and succinic anhydride.

The polyester polyol compound (A) is preferably acid-modified to exhibit better biodegradability. The acid-modified polyester polyol compound (A) is specifically a polyol having an acidic group in the polyol molecule. Examples of the acidic group include a carboxy group and a phosphoric acid group, among which a carboxy group is preferred in view of ease of production.

There are no particular limitations on the method for producing the acid-modified polyester polyol compound (A), but a method of adding an acid anhydride group-containing compound to the hydroxy group of various polyols to introduce a carboxy group is preferably used. Examples of the acid anhydride group-containing compound to be added to various polyols include trimellitic anhydride, phthalic anhydride, hexahydrophthalic anhydride, succinic anhydride, maleic anhydride, pyromellitic anhydride, tetrahydrophthalic anhydride, and methyl tetrahydrophthalic anhydride, among which the use of trimellitic anhydride is preferred.

The acid-modified polyester polyol compound (A) can also be produced by adjusting the composition to have both a hydroxy group and a carboxy group.

The acid value of the polyester polyol compound (A) is not limited to a particular acid vale and is 5 to 50 mgKOH/g and preferably 10 to 30 mgKOH/g. When the acid value is within this range, biodegradability further improves. The acid value can be measured by the method described in JIS-K0070.

Apart from the polyester polyol compound (A) as a reaction product of an aliphatic alcohol having a quaternary carbon atom and having trivalent or more hydroxy groups, examples of specific preferred aspects of the polyester polyol compound (A) include the polyester polyol compound (A) with diethylene glycol, adipic acid, and phthalic acid as reaction raw materials.

### (Polyisocyanate Composition (Y))

The polyisocyanate composition (Y) contains the polyisocyanate compound (B) having a plurality of isocyanate groups. The polyisocyanate compound (B) is not limited to a particular compound, and examples thereof include aromatic diisocyanates, aromatic aliphatic diisocyanates, aliphatic diisocyanates, and alicyclic diisocyanates; biuret forms, nurate forms, adduct forms, allophanate forms, carbodiimide-modified forms, polymeric forms, and uretdione-modified forms of theses diisocyanates; and urethane prepolymers obtained by reacting these polyisocyanates and polyols, which can be used individually or in combination.

Examples of the aromatic diisocyanates include 2,2'-diphenylmethane diisocyanate, 2,4'-diphenylmethane diisocyanate, 4,4'-diphenylmethane diisocyanate, polymethylene polyphenyl polyisocyanate (also called polymeric MDI or crude MDI), 1,3-phenylene diisocyanate, 4,4'-diphenyl diisocyanate, 1,4-phenylene diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenyl ether diisocyanate, and 4,4',4"-triphenylmethane triisocyanate, but these are not limiting.

The aromatic aliphatic diisocyanate means an aliphatic isocyanate having one or more aromatic rings in the molecule, and examples thereof include m- and p-xylylene diisocyanate (also known as XDI), and α,α,α',α'-tetramethylxylylene diisocyanate (also known as TMXDI), but these are not limiting.

Examples of the aliphatic diisocyanates include trimethylene diisocyanate, tetramethylene diisocyanate, hexamethylene diisocyanate (also known as HDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate, but these are not limiting.

Examples of the alicyclic diisocyanates include 3-isocyanatomethyl-3,5,5-trimethylcyclohexyl isocyanate, isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), and 1,4-bis(isocyanatomethyl)cyclohexane, but these are not limiting.

As the polyol used in the synthesis of the urethane prepolymer, the same ones as those exemplified as the polyol composition (X) can be used. Since adhesive strength can be increased while reducing the viscosity of the adhesive, at least one of polyalkylene glycols or polyester polyols is preferably used.

The polyalkylene glycols preferably have a number average molecular weight in a range of 200 to 6,000. The polyester polyols are preferably obtained by reacting polyalkylene glycols and aliphatic polyvalent carboxylic acids having 2 to 30 carbon atoms. For the polyester polyols, tri- or more functional alcohols such as glycerin, trimethylolpropane, and pentaerythritol may be used as their raw material alcohol component at a ratio of 10% by mass or less of the polyol component.

For soft packaging base materials, polyisocyanates obtained by reacting aromatic polyisocyanates and polyalkylene glycols with a number average molecular weight in a range of 200 to 6,000 and polyisocyanates obtained by reacting aromatic polyisocyanates and polyester polyols with a number average molecular weight in a range of 200 to 3,000 are preferred because of capability of imparting moderate flexibility to a cured product. An isocyanate content by titration (using di-n-butylamine) of 5 to 20% by mass is preferred because of appropriate resin viscosity to give excellent application properties.

For hard base materials, on the other hand, polyisocyanates obtained by reacting aromatic polyisocyanates and polyester polyols with a number average molecular weight in a range of 200 to 3,000 and polyisocyanates obtained by reacting aromatic polyisocyanates and a mixture of polyester polyols with a number average molecular weight in a range of 200 to 3,000 and polyalkylene glycols with a number average molecular weight in a range of 200 to 6,000 are preferred because of their excellent adhesive strength. An isocyanate content by titration (using di-n-butylamine) of 5 to 20% by mass is also preferred because of appropriate resin viscosity to give excellent application properties.

When the polyisocyanate compound (B) is a urethane prepolymer, the equivalent ratio [NCO]/[OH] between isocyanate groups and hydroxy groups to be reacted is preferably in a range of 1.2 to 10.0 because the viscosity of the adhesive is in an appropriate range to give good application properties.

When the adhesive of the present invention is the solventless type, the viscosity of the polyisocyanate composition (Y) is adjusted to a range suitable for the non-solvent lamination method. As an example, the viscosity at 30 to 80°C is adjusted to a range of 500 to 5,000 mPa·s and more preferably 500 to 3,000 mPa·s. The viscosity of the polyisocyanate composition (Y) can be adjusted by, as an example, the blending amount of the urethane prepolymer or the blending amount of a low molecular weight isocyanate compound.

When the adhesive of the present invention is used as the solvent type, the viscosity of the polyisocyanate composition (Y) is adjusted to a viscosity suitable for application by dilution with a solvent.

When the polyisocyanate compound (B) used in the present invention is a reaction product of an aliphatic alcohol having a quaternary carbon atom and having trivalent or more hydroxy groups, examples of the aliphatic alcohol having a quaternary carbon atom and having trivalent or more hydroxy groups include trimethylolpropane, trimethylolethane, trimethylolbutane, and pentaerythritol.

Specific examples of the polyisocyanate compound (B) as a reaction product of an aliphatic alcohol having a quaternary carbon atom and having trivalent or more hydroxy groups include:
(1) polyisocyanate compounds as reaction products of trimethylolpropane and hexamethylene diisocyanate,
(2) polyisocyanate compounds as reaction products of trimethylolpropane and toluene diisocyanate,
(3) polyisocyanate compounds as reaction products of trimethylolpropane and isophorone diisocyanate,
(4) polyisocyanate compounds as reaction products of trimethylolpropane and xylylene diisocyanate.

In the present invention, it is essential that either or both of the polyester polyol compound (A) and the polyisocyanate compound (B) be a reaction product of an aliphatic alcohol having a quaternary carbon atom and having trivalent or more hydroxy groups. In particular, the polyisocyanate compound (B) is preferably a reaction product of an aliphatic alcohol having a quaternary carbon atom and having trivalent or more hydroxy groups because better biodegradability can be obtained.

### (Aromatic Ring and/or Aliphatic Ring)

In the present invention, in order for the two-component curable adhesive of the present invention to exhibit good adhesive performance, the polyol composition (X) and/or the polyisocyanate composition (Y) as the components of the adhesive preferably contain an aromatic ring and/or aliphatic ring. Examples of the method for introducing the aromatic ring and/or aliphatic ring into the adhesive composition include a method of using the polyol and the polyvalent carboxylic acid having an aromatic ring and/or aliphatic ring as the polyol and the polyvalent carboxylic acid as the raw materials of the polyester polyol compound (A). When the polyester polyol compound (A) is a polyester polyurethane polyol, polyisocyanates having an aromatic ring and/or aliphatic ring may be used as a polyisocyanate for use in a urethane formation reaction, without any particular limitations.

Polyisocyanates having an aromatic ring and/or aliphatic ring can also be used as the polyisocyanate compound (B).

If the content of the aromatic ring and/or aliphatic ring is too high, on the other hand, biodegradability and detachability when immersed in an aqueous alkali solution tend to be inferior. Thus, in the present invention, a more preferred content of the aromatic ring and/or aliphatic ring is preferably contained in an amount of 0.63 to 2.8 meq/g and most preferably contained in an amount of 0.65 to 2.0 meq/g with respect to the total mass of the adhesive of the present invention. Note that in the present invention, the content of the aromatic ring and/or aliphatic ring is determined by the following expression. Aromatic ring and aliphatic ring content in total mass of adhesive (meq/g) = (aromatic ring (eq) + aliphatic ring (eq))/(polyol composition (X) weight (solid content) (g) + polyisocyanate composition (Y) weight (solid content) (g)) × 1,000

### (Urethane Bond Concentration)

In the present invention, from the viewpoint of biodegradability under composting conditions and detachability when immersed in an aqueous alkali solution, the total of a urethane bond concentration and a urea bond concentration with respect to the total mass (solid content) of the adhesive of the present invention is preferably 0.1 to 2.0 meq/g. The sum of the urethane bond concentration and the urea bond concentration is particularly preferably 0.2 to 1.0 meq/g.

Note that the urethane bond concentration and the urea bond concentration are values calculated by the following expressions. In the expressions, OH represents a hydroxy group and NCO represents an isocyanate group. Urethane bond concentration in total mass of adhesive (meq/g) = OH (eq)/[polyol composition (X) weight (solid content) (g) + polyisocyanate composition (Y) weight (solid content) (g)] × 1,000 Urea bond concentration in total mass of adhesive (meq/g) = ([NCO (eq) - OH (eq)]/2)/[polyol composition (X) weight (solid content) (g) + polyisocyanate composition (Y) weight (solid content) (g)] × 1,000 OH (eq) = (polyol hydroxyl value (solid content)/56.1) × (polyol composition (X) weight (solid content)/1,000) NCO (eq) = (NCO% (solid content)/4,202) × (polyisocyanate composition (Y) weight (solid content))

### (Amount of Aliphatic Polyhydric Alcohol having Quaternary Carbon Atom and Trivalent or more Hydroxy Groups in Total Mass of Adhesive)

In the present invention, when the content of the aliphatic alcohol having a quaternary carbon atom and having trivalent or more hydroxy groups in the total mass of the adhesive increases, biodegradability tends to increase, which is preferred. The amount is a value calculated by the following expression as "Amount of aliphatic alcohol having quaternary carbon atom and having trivalent or more hydroxy groups in total mass of adhesive (mmol/g)" and is preferably contained in an amount of 0.05 to 1.0 mmol/g and most preferably contained in an amount of 0.1 to 0.5 mmol/g with respect to the total mass of the adhesive of the present invention. Amount of aliphatic alcohol having quaternary carbon atom and having trivalent or more hydroxy groups in total mass of adhesive (mmol/g) = amount of aliphatic alcohol having quaternary carbon atom and having trivalent or more hydroxy groups (mol)/[polyol composition (X) weight (solid content) (g) + polyisocyanate composition (Y) weight (solid content) (g)] × 1,000

In the present invention, it is preferable to balance the content of the aromatic ring and/or aliphatic ring, the urethane bond concentration, and the amount of the aliphatic alcohol having a quaternary carbon atom and having trivalent or more hydroxy groups in the total mass of the adhesive of the present invention.

### (Other Components (D) of Adhesive)

The adhesive of the present invention may contain components other than the components described above. The other components (D) may be contained in either or both of the polyol composition (X) and the polyisocyanate composition (Y), or they may be prepared separately from the compositions and mixed together with the polyol composition (X) and the polyisocyanate composition (Y) immediately before the adhesive is applied. The following describes each component.

### (Dehydrated Condensate (C) of Hydroxy Acid)

The adhesive of the present invention can contain a compound formed by intramolecular dehydration condensation of molecules having a hydroxy group and a carboxy group (hydroxycarboxylic acids). Examples of such a compound include lactones and lactides. Among these, the use of lactides is preferred because it can impart good biodegradability.

Examples of the lactones include cyclic lactone compounds such as ε-caprolactone, γ-butyrolactone, γ-valerolactone, and δ-valerolactone.

The lactide is a cyclic compound having two ester bonds in the molecule resulting from dehydration condensation of respective hydroxy groups and carboxy groups in two molecules of a hydroxy acid. Specific examples thereof include glycolide, 3,6-dimethyl-1,4-dioxane-2,5-dione (derived from 2-hydroxypropionic acid (lactic acid)), and 1,6-dioxacyclodecane-2,7-dione (derived from 4-hydroxybutanoic acid). Among these, what is called the lactide derived from lactic acid may be an optically active substance, which includes L-lactide, D-lactide, and meso-lactide. Among these, L-lactide and meso-lactide are preferred not only because they are readily available but also because they can increase not only biodegradability but also the degree of biomass because they are plant-derived raw materials. Polyesters having a lactic acid skeleton are decomposed by enzymes secreted from microorganisms in the soil and can thus reduce the load on the environment.

The dehydrated condensate (C) of a hydroxy acid is preferably contained in an amount of 1 to 10% by mass with respect to the total solid content of the adhesive of the present invention, and in this range, the expression of biodegradability can be achieved. The amount is more preferably 2 to 5% by mass. A too large amount of the lactide added gives rise to a reduction in adhesive performance, which is not preferred.

The dehydrated condensate (C) of a hydroxy acid may be contained in either or both of the polyol composition (X) and the polyisocyanate composition (Y), but it is preferably contained in the polyol composition in view of storage stability.

### (Catalyst)

The adhesive of the present invention can contain metal-based catalysts, amine-based catalysts, aliphatic cyclic amide compounds, or the like as catalysts.

Examples of the metal-based catalysts include metal complex-based, inorganic metal-based, and organometal-based catalysts. Examples of the metal complex-based catalysts include acetylacetonate salts of a metal selected from the group consisting of Fe (iron), Mn (manganese), Cu (copper), Zr (zirconium), Th (thorium), Ti (titanium), Al (aluminum), and Co (cobalt); examples thereof include iron acetylacetonate, manganese acetylacetonate, copper acetylacetonate, and zirconia acetylacetonate.

Examples of the inorganic metal-based catalysts include those selected from Sn, Fe, Mn, Cu, Zr, Th, Ti, Al, Co, and the like.

Examples of the organometal-based catalysts include organozinc compounds such as zinc octylate, zinc neodecanoate, and zinc naphthenate; organotin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organonickel compounds such as nickel octylate and nickel naphthenate; organocobalt compounds such as cobalt octylate and cobalt naphthenate; organobismuth compounds such as bismuth octylate, bismuth neodecanoate, and bismuth naphthenate; and titanium-based compounds such as tetraisopropyloxy titanate, dibutyltitanium dichloride, tetrabutyl titanate, butoxytitanium trichloride, and titanium chelate complexes with at least one of aliphatic diketones, aromatic diketones, and alcohols having 2 to 10 carbon atoms as a ligand.

Examples of the amine-based catalysts include triethylenediamine, 2-methyl triethylenediamine, quinuclidine, 2-methyl quinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl) ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undec-7-ene, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compounds include δ-valerolactam, ε-caprolactam, ω-enantholactam, η-capryllactam, and β-propiolactam. Among these, ε-caprolactam is more effective in promoting curing.

### (Acid Anhydride)

The adhesive of the present invention can contain cyclic aliphatic acid anhydrides, aromatic acid anhydrides, unsaturated carboxylic acid anhydrides, or the like as acid anhydrides, which can be used individually or in combination. More specific examples thereof include phthalic anhydride, trimellitic anhydride, pyromellitic anhydride, benzophenone tetracarboxylic anhydride, dodecenyl succinic anhydride, polyadipic anhydride, polyazelaic anhydride, polysebacic anhydride, poly(ethyl octadecanedioic) anhydride, poly(phenylhexadecanedioic) anhydride, tetrahydrophthalic anhydride, methyl tetrahydrophthalic anhydride, methyl hexahydrophthalic anhydride, hexahydrophthalic anhydride, methyl himic anhydride, trialkyltetrahydrophthalic anhydride, methylcyclohexene dicarboxylic anhydride, methylcyclohexene tetracarboxylic anhydride, ethylene glycol bis-trimellitate dianhydride, het anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalene succinic dianhydride, and 1-methyl-dicarboxy-1,2,3,4-tetrahydro-1-naphthalene succinic dianhydride.

As the acid anhydride, compounds obtained by modifying the compounds described above with glycols may be used. Examples of the glycols that can be used for modification include alkylene glycols such as ethylene glycol, propylene glycol, and neopentyl glycol; and polyether glycols such as polyethylene glycol, polypropylene glycol, and polytetramethylene ether glycol. Further, copolymerized polyether glycols of two or more of these glycols and/or polyether glycols can also be used.

### (Coupling Agent)

The adhesive of the present invention can contain silane coupling agents, titanate coupling agents, aluminum coupling agents, or the like as coupling agents.

Examples of the silane coupling agents include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate coupling agents include tetraisopropoxy titanium, tetra-n-butoxy titanium, butyl titanate dimer, tetrastearyl titanate, titanium acetylacetonate, titanium lactate, tetraoctylene glycol titanate, and tetrastearoxy titanium.

Examples of the aluminum coupling agents include acetoalkoxyaluminum diisopropylate.

### (Pigment)

The adhesive of the present invention can contain pigments without any particular limitations, such as organic pigments and inorganic pigments such as extender pigments, white pigments, black pigments, gray pigments, red pigments, brown pigments, green pigments, blue pigments, metallic powder pigments, luminescent pigments, and pearl pigments and plastic pigments described in the 1970 edition of the Handbook of Raw Materials for Coatings (edited by Japan Paint Manufacturers Association).

Examples of the extender pigments include sedimented barium sulfate, powdered calcium carbonate, sedimented calcium carbonate, calcium bicarbonate, white limestone, alumina white, silica, hydrous fine silica (white carbon), ultrafine anhydrous silica (Aerosil), silica sand, talc, sedimented magnesium carbonate, bentonite, clay, kaolin, and ocher.

Specific examples of the organic pigments include various kinds of insoluble azo pigments such as Benzidine Yellow, Hansa Yellow, and Lake Red 4R; soluble azo pigments such as Lake Red C, Carmine 6B, and Bordeaux 10; various kinds of (copper) phthalocyanine pigments such as phthalocyanine blue and phthalocyanine green; various kinds of basic dyeing lakes such as rhodamine lake and methyl violet lake; various kinds of mordant dye pigments such as quinoline lake and fast sky blue; various kinds of vat dyeing pigments such as anthraquinone pigments, thioindigo pigments, and perinone pigments; various kinds of quinacridone pigments such as Cinquasia Red B; various kinds of dioxazine pigments such as dioxazine violet; various kinds of condensed azo pigments such as Cromophtal; and aniline black.

Examples of the inorganic pigments include various kinds of chromates such as chrome yellow, zinc chromate, and molybdate orange; various kinds of ferrocyanides such as dark blue; various kinds of metal oxides such as titanium oxide, zinc white, Mapico Yellow, iron oxide, red iron oxide, chrome oxide green, and zirconium oxide; various kinds of sulfides and selenides such as cadmium yellow, cadmium red, and mercury sulfide; various kinds of sulfates such as barium sulfate and lead sulfate; various kinds of silicates such as calcium silicate and ultramarine blue; various kinds of carbonates such as calcium carbonate and magnesium carbonate; various kinds of phosphates such as cobalt violet and manganese violet; various kinds of metallic power pigments such as aluminum powder, gold powder, silver powder, copper powder, bronze powder, and brass powder; flake pigments of these metals and mica flake pigments; metallic pigments and pearl pigments such as mica flake pigments in the form of being covered with metal oxides and mica-like iron oxide pigments; and graphite and carbon black.

Examples of the plastic pigments include "Grandol PP-1000" and "PP-2000S" manufactured by DIC Corporation.

The pigment used may be selected as appropriate in accordance with a purpose. For example, inorganic oxides such as titanium oxide and zinc white are preferably used as a white pigment and carbon black is preferably used as a black pigment because of excellence in durability, weatherability, and visual quality.

The blending amount of the pigment is, as an example, 1 to 400 parts by mass with respect to 100 parts by mass of the total solid content of the polyol composition (X) and the polyisocyanate composition (Y) and more preferably 10 to 300 parts by mass for better adhesion and blocking resistance.

### (Plasticizer)

The adhesive of the present invention can contain, for example, phthalic acid-based plasticizers, fatty acid-based plasticizers, aromatic polycarboxylic acid-based plasticizers, phosphoric acid-based plasticizers, polyol-based plasticizers, epoxy-based plasticizers, polyester-based plasticizers, carbonate-based plasticizers, or the like as plasticizers.

Examples of the phthalic acid-based plasticizers include phthalate-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl)isophthalate, and diisooctyl isophthalate, and tetrahydrophthalate-based plasticizers such as di-(2-ethylhexyl)tetrahydrophthalate, di-n-octyl tetrahydrophthalate, and diisodecyl tetrahydrophthalate.

Examples of the fatty acid-based plasticizers include adipic acid-based plasticizers such as di-n-butyl adipate, di-(2-ethylhexyl)adipate, diisodecyl adipate, diisononyl adipate, di(C6-C10 alkyl)adipate, and dibutyl diglycol adipate; azelaic acid-based plasticizers such as di-n-hexyl azelate, di-(2-ethylhexyl)azelate, and diisooctyl azelate; sebacic acid-based plasticizers such as di-n-butyl sebacate, di-(2-ethylhexyl)sebacate, and diisononyl sebacate; maleic acid-based plasticizers such as dimethyl malate, diethyl malate, di-n-butyl malate, and di-(2-ethylhexyl) malate; fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetyl ricinolate, butyl acetyl ricinolate, glyceryl monoricinolate, and diethylene glycol monoricinolate; and other fatty acid-based plasticizers such as diethylene glycol monolaurate, diethylene glycol dipelargonate, and pentaerythritol fatty acid esters.

Examples of the aromatic polycarboxylic acid-based plasticizers include trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate and pyromellitic acid-based plasticizers such as tetra-(2-ethylhexyl) pyromellitate and tetra-n-octyl pyromellitate.

Examples of the phosphoric acid-based plasticizers include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizers include glycol-based plasticizers such as diethylene glycol dibenzoate, dipropylene glycol dibenzoate, triethylene glycol dibenzoate, triethylene glycol di-(2-ethyl butyrate), triethylene glycol di-(2-ethyl hexanoate), and dibutyl methylene bis-thioglycolate; and glycerin-based plasticizers such as glycerol monoacetate, glycerol triacetate, and glycerol tributyrate.

Examples of the epoxy-based plasticizers include epoxidized soybean oil, epoxy butyl stearate, di-2-ethylhexyl epoxy hexahydrophthalate, diisodecyl epoxy hexahydrophthalate, epoxy triglyceride, epoxidized octyl oleate, and epoxidized decyl oleate.

Examples of the polyester-based plasticizers include adipic acid-based polyesters, sebacic acid-based polyesters, and phthalic acid-based polyesters.

Examples of the carbonate-based plasticizers include propylene carbonate and ethylene carbonate.

Other examples of the plasticizers include partially hydrogenated terphenyls, adhesive plasticizers, and polymerizable plasticizers such as diallyl phthalate and acrylic monomers and oligomers. These plasticizers can be used individually or in combination.

### (Form of Adhesive)

The adhesive of the present invention may be in either form of the solvent type or the solventless type. The "solvent type" adhesive referred to in the present invention refers to a form used in a method in which the adhesive is applied to a base material, which is then heated in an oven or the like to volatilize an organic solvent in a coating film and is then bonded to another base material, or what is called the dry lamination method. Either or both of the polyol composition (X) and the polyisocyanate composition (Y) contain an organic solvent capable of dissolving (diluting) the component of the polyol composition (X) and the component of the polyisocyanate composition (Y) used in the present invention.

Examples of the organic solvent include esters such as methyl acetate, ethyl acetate, butyl acetate, dimethyl carbonate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride, dimethyl sulfoxide, and dimethylsulfonamide.

In the present specification, the "solventless type" adhesive refers to a form of an adhesive used in a method in which the polyol composition (X) and the polyisocyanate composition (Y) do not substantially contain an organic solvent having high solubility like those described above, especially ethyl acetate or methyl ethyl ketone, and the adhesive is applied to a base material, which is then bonded to another base material without involving a step of heating it in an oven or the like to volatilize the solvent, or what is called the non-solvent lamination method. When the organic solvent used as the reaction medium during production of the components of the polyol composition (X) and the polyisocyanate composition (Y) or the raw materials thereof has not completely been removed, and a minute amount of the organic solvent is left in the polyol composition (X) and the polyisocyanate composition (Y), it is understood that the organic solvent is not substantially contained. When the polyol composition (X) contains a low molecular weight alcohol, the low molecular weight alcohol reacts with the polyisocyanate composition (Y) to become part of the coating film and is thus not required to be volatilized after application. Thus, such a form is also treated as the solventless type adhesive, and the low molecular weight alcohol is not regarded as the organic solvent.

The adhesive of the present invention is preferably blended and used such that the ratio of the number of moles [NCO] of isocyanate groups contained in the polyisocyanate composition (Y) to the number of moles [OH] of hydroxy groups contained in the polyol composition (X), that is, [NCO]/[OH] is 0.8 to 5.0 and preferably 1.0 to 5.0.

### (Biodegradability)

The two-component curable adhesive of the present invention shows biodegradability. In the present invention, biodegradability is a value determined by a method conforming to JIS K6953-1: 2011. Specifically, biodegradability is evaluated with a culture temperature of 58°C and a culture period of 28 days.
Under these conditions, a compost decomposition rate of the two-component curable adhesive of the present invention under composting conditions is more preferably 20% or more, further preferably 30% or more, and particularly preferably 40% or more.

### <Laminate>

The laminate of the present invention is obtained by bonding a plurality of base materials (films or paper) to each other using the adhesive of the present invention by the dry lamination method or the non-solvent lamination method. There are no particular limitations on the film to be used, and a film according to uses can be selected as appropriate. Examples thereof for food packaging include polyethylene terephthalate (PET) films, polystyrene films, polyamide films, polyacrylonitrile films, polyethylene films (LLDPE: low density polyethylene films, HDPE: high density polyethylene films, MDOPE: machine direction oriented polyethylene films, and OPE: biaxially oriented polyethylene films), polyolefin films such as polypropylene films (CPP: cast polypropylene films and OPP: biaxially oriented polypropylene films), polyvinyl alcohol films, and ethylenevinyl alcohol copolymer films.

Biomass films formed of materials containing biomass-derived components are also preferably used. The biomass films are available from various companies, and for example, sheets such as those listed in the list of certified biomass products described in the Japan Organic Resources Association can be used.

Examples of specifically well-known biomass films include ones made from biomass-derived ethylene glycol. The biomass-derived ethylene glycol is made from ethanol produced from biomass (biomass ethanol). For example, the biomass-derived ethylene glycol can be obtained from the biomass ethanol by a method of producing ethylene glycol via ethylene oxide by conventionally known methods. Commercially available biomass ethylene glycol may also be used. For example, biomass ethylene glycol commercially available from India Glycols Limited. can be suitably used.

For example, as an alternative to conventional polyethylene terephthalate films made from petroleum-based raw materials, known are films containing biomass polyester, biomass polyethylene terephthalate, and the like with the biomass-derived ethylene glycol as a diol unit and with a fossil fuel-derived dicarboxylic acid as a dicarboxylic acid unit.

For the dicarboxylic acid unit of the biomass polyester, fossil fuel-derived dicarboxylic acids are used. As the dicarboxylic acids, aromatic dicarboxylic acids, aliphatic dicarboxylic acids, and derivatives thereof can be used without limitations.

In addition to the diol component and the dicarboxylic acid component, it may be a copolymerized polyester with a copolymerization component added as a third component such as at least one polyfunctional compound selected from the group consisting of bifunctional oxycarboxylic acids, in order to form a cross-linked structure, tri- or more functional polyhydric alcohols, tri- or more functional polyvalent carboxylic acids and/or anhydrides thereof, and tri-or more functional oxycarboxylic acids.

For example, as an alternative to conventional polyolefin-based films made from petroleum-based raw materials, also known are biomass polyolefin-based films such as biomass polyethylene-based films and biomass polyethylene-polypropylene-based films containing polyethylene-based resins made from the biomass-derived ethylene glycol.

The polyethylene-based resins are not limited to particular resins except for the use of the biomass-derived ethylene glycol as part of the raw material, and examples thereof include ethylene monopolymers and copolymers of ethylene and α-olefins with ethylene as the main component (ethylene-α-olefin copolymers containing 90% by mass or more of an ethylene unit), which can be used individually or in combination.

The α-olefins forming the copolymers of ethylene and α-olefins are not limited to particular α-olefins, and examples thereof include α-olefins having 4 to 8 carbon atoms such as 1-butene, 4-methyl-1-pentene, 1-hexene, and 1-octene. Known polyethylene resins such as low-density polyethylene resins, medium-density polyethylene resins, and linear low-density polyethylene resins can be used. Among them, from the viewpoint of making it more resistant to damage such as holes and tears even when the films rub against each other, linear low-density polyethylene resins (LLDPE) (a copolymer of ethylene and 1-hexene or a copolymer of ethylene and 1-octene) are preferred, and linear low-density polyethylene resins with a density of 0.910 to 0.925 g/cm³ are more preferred.

As the biomass films, ones containing biomass raw materials distinguished by their biomass plastic degree as specified by ISO 16620 or ASTM D6866 are also distributed. In the atmosphere, radiocarbon 14C is present at a rate of 1 in 1,012, and this rate remains unchanged in carbon dioxide in the atmosphere, and thus this rate remains unchanged even in plants fixing this carbon dioxide by photosynthesis. Thus, carbon in plant-derived resins contains radiocarbon 14C. In contrast, carbon in fossil fuel-derived resins contains little radiocarbon 14C. Given these circumstances, by measuring the concentration of radiocarbon 14C in a resin with an accelerator mass spectrometer, the content ratio of the plant-derived resins in the resin, that is, the biomass plastic degree can be determined.

Examples of plant-derived low-density polyethylenes as biomass plastics having a biomass plastic degree specified by ISO 16620 or ASTM D6866 of 80% or more and preferably 90% or more include products named as "SBC818", "SPB608", "SBF0323HC", "STN7006", "SEB853", and "SPB681" manufactured by Braskem S.A., and films using these as raw materials can be suitably used.

Also known are films and sheets blended with starch as a biomass material and polylactic acid. These can be selected and used as appropriate in accordance with uses.

The biomass films may be laminates with a plurality of biomass films laminated or laminates of conventional petroleum-based films and biomass films. These biomass films may be either unoriented films or oriented films, and the method for producing them is also not limited.

Films having biodegradability are also preferred. It is known that films and sheets blended with starch as the biomass material described above and polylactic acid have biodegradability. These can be selected and used as appropriate in accordance with uses.

The film may be subjected to orienting. As a method of orienting, it is general to melt and extrude resin into a sheet form by an extrusion film forming method or the like and then perform simultaneous biaxial orienting or sequential biaxial orienting. In the case of sequential biaxial orienting, it is general to perform longitudinal orienting first and then perform lateral orienting. Specifically, a combination of longitudinal orienting using speed difference between rolls and lateral orienting using a tenter is often used.

Various kinds of surface treatment such as flame treatment and corona discharge treatment may be applied to the film surface as needed so as to form an adhesive layer free from defects such as film breakage and bursting.

Alternatively, a film in which a vapor deposition layer of a metal such as aluminum or a metal oxide such as silica or alumina is laminated or a barrier film containing a gas barrier layer such as polyvinyl alcohol, ethylene-vinyl alcohol copolymer, or vinylidene chloride may be used. Using such a film allows the laminate to have barrier properties against water vapor, oxygen, alcohols, inert gases, volatile organic substances (fragrances), and the like.

As to paper, any known paper base materials can be used without any particular limitations. Specifically, paper is manufactured using natural fibers for papermaking such as wood pulp by a known papermaking machine, and the conditions for papermaking are not particularly specified. Examples of the natural fibers for papermaking include wood pulps such as softwood pulps and hardwood pulps, non-wood pulps such as Manila hemp pulp, sisal hemp pulp, and flax pulp, and pulps obtained by chemically modifying these pulps. As to the type of pulps, chemical pulps, ground pulps, chemiground pulps, thermomechanical pulps, and the like made by sulfate digesting, acidic, neutral, or alkaline sulfite digesting, soda salt digesting, and the like can be used. Various commercially available fine paper, coated paper, backed paper, impregnated paper, cardboards, paperboards, and the like can also be used.

More specific examples of the configuration of the laminate include, but are not limited to:
(1) base material film 1/adhesive layer 1/sealant film,
(2) base material film 1/adhesive layer 1/metal vapor-deposited unoriented film,
(3) base material film 1/adhesive layer 1/metal vapor-deposited oriented film,
(4) transparent vapor-deposited oriented film/adhesive layer 1/sealant film,
(5) base material film 1/adhesive layer 1/base material film 2/adhesive layer 2/sealant film,
(6) base material film 1/adhesive layer 1/metal vapor-deposited oriented film/adhesive layer 2/sealant film,
(7) base material film 1/adhesive layer 1/transparent vapor-deposited oriented film/adhesive layer 2/sealant film,
(8) base material film 1/adhesive layer 1/metal layer/adhesive layer 2/sealant film,
(9) base material film 1/adhesive layer 1/base material film 2/adhesive layer 2/metal layer/adhesive layer 3/sealant film,
(10) base material film 1/adhesive layer 1/metal layer/adhesive layer 2/base material film 2/adhesive layer 3/sealant film.

Examples of the base material film 1 used in the configuration (1) include MDOPE films, OPE films, OPP films, PET films, nylon films, and various biodegradable base materials such as paper and cellophane films. The base material film 1 may be provided with a coating for the purpose of improving gas barrier properties and ink receptivity when a printed layer described below is provided. Commercially available examples of the base film 1 provided with a coating include K-OPP film and K-PET film. The adhesive layer 1 is a cured coating film of the adhesive of the present invention. Examples of the sealant film include CPP films, LLDPE films, gas barrier heat seal films, and various biodegradable base materials such as polybutylene succinate and polylactic acid. A printed layer described below may be provided on a face of the base material film 1 closer to the adhesive layer 1 (when the base material film 1 provided with a coating is used, a face of the coating layer closer to the adhesive layer 1) or a face on the side opposite to the adhesive layer 1. The printed layer is formed by general printing methods that have conventionally been used for printing on polymer films and paper with various kinds of printing inks such as gravure inks, flexographic inks, offset inks, stencil inks, and inkjet inks.

Examples of the base material film 1 used in the configurations (2) and (3) include MDOPE films, OPE films, OPP films, PET films, and paper. The adhesive layer 1 is a cured coating film of the adhesive of the present invention. As the metal vapor-deposited unoriented film, a VM-CPP film, a VM-LLDPE film, or the like, in which metal vapor deposition such as aluminum is applied to a CPP film, an LLDPE film, or a gas barrier heat seal film, can be used, whereas as the metal vapor-deposited oriented film, a VM-MDOPE film, a VM-OPE film, or a VM-OPP film, in which metal vapor deposition such as aluminum is applied to an MDOPE film, an OPE film, or an OPP film, can be used. In the same way as the configuration (1), a printed layer may be provided on either face of the base material film 1.

Examples of the transparent vapor-deposited oriented film used in the configuration (4) include films obtained by applying silica or alumina vapor deposition to MDOPE films, OPE films, OPP films, PET films, nylon films, or the like. For the purpose of protecting the inorganic vapor deposition layer of silica or alumina, a film provided with a coating on the vapor deposition layer may be used. The adhesive layer 1 is a cured coating film of the adhesive of the present invention. The sealant film can be the same as those of the configuration (1). A printed layer may be provided on a face of the transparent vapor-deposited oriented film closer to the adhesive layer 1 (when the inorganic vapor deposition layer provided with a coating is used, a face of the coating layer closer to the adhesive layer 1). The method for forming the printed layer is similar to that of the configuration (1).

Examples of the base material film 1 used in the configuration (5) include PET films and paper. Examples of the base material 2 include nylon films. At least one of the adhesive layer 1 and the adhesive layer 2 is a cured coating film of the adhesive of the present invention. The sealant film can be the same as those of the configuration (1). In the same way as the configuration (1), a printed layer may be provided on either face of the base material film 1.

The base material film 1 of the configuration (6) can be the same as those of the configurations (2) and (3). Examples of the metal vapor-deposited oriented film include VM-MDOPE films, VM-OPE films, VM-OPP films, and VM-PET films, in which metal vapor deposition such as aluminum is applied to MDOPE films, OPE films, OPP films, and PET films. At least one of the adhesive layer 1 and the adhesive layer 2 is a cured coating film of the adhesive of the present invention. The sealant film can be the same as those of the configuration (1). In the same way as the configuration (1), a printed layer may be provided on either face of the base material film 1.

Examples of the base material film 1 of the configuration (7) include PET films and paper. The transparent vapor-deposited oriented film can be the same as those of the configuration (4). At least one of the adhesive layers 1 and 2 is a cured coating film of the adhesive of the present invention. The sealant film can be the same as those of the configuration (1). In the same way as the configuration (1), a printed layer may be provided on either face of the base material film 1.

Examples of the base material film 1 of the configuration (8) include PET films and paper. Examples of the metal layer include aluminum foil. At least one of the adhesive layers 1 and 2 is a cured coating film of the adhesive of the present invention. The sealant film can be the same as those of the configuration (1). In the same way as the configuration (1), a printed layer may be provided on either face of the base material film 1.

Examples of the base material film 1 of the configurations (9) and (10) include PET films and paper. Examples of the base material 2 include nylon films. Examples of the metal layer include aluminum foil. At least one layer of the adhesive layers 1, 2, and 3 is a cured coating film of the adhesive of the present invention. The sealant film can be the same as those of the configuration (1). In the same way as the configuration (1), a printed layer may be provided on either face of the base material film 1.

The adhesive of the present invention is usually used as a two-component adhesive. Thus, the polyol composition (X) and the polyisocyanate composition (Y) are preferably mixed together to be used immediately before use. As to the blending ratio, as described above, they are preferably blended and used such that the ratio of the number of moles [NCO] of isocyanate groups contained in the polyisocyanate composition (Y) to the number of moles [OH] of hydroxy groups contained in the polyol composition (X), that is, [NCO]/[OH] is 0.8 to 5.0 and preferably 1.0 to 5.0.

When the adhesive of the present invention is of the solvent type, the adhesive of the present invention is applied to a film material as a base material using a roll such as a gravure roll, the organic solvent is volatized by heating in an oven or the like, and then another base material is bonded thereto to obtain the laminate of the present invention. After lamination, aging treatment is preferably performed. The aging temperature is preferably room temperature to 80°C, and the aging time is preferably 12 to 240 hours.

When the adhesive of the present invention is of the solventless type, the adhesive of the present invention heated to about 40°C to 100°C in advance is applied to a film material as a base material using a roll such as a gravure roll, and then another base material is immediately bonded thereto to obtain the laminate of the present invention. After lamination, aging treatment is preferably performed. The aging temperature is preferably room temperature to 70°C, and the aging time is preferably 6 to 240 hours.

The application amount of the adhesive is adjusted as appropriate. In the case of the solvent type adhesive, the application amount is adjusted so as to give a solid content of as an example 1 g/m² or more and 10 g/m² or less and preferably 2 g/m² or more and 5 g/m² or less. In the case of the solventless type adhesive, the application amount of the adhesive is as an example 1 g/m² or more and 5 g/m² or less and preferably 1 g/m² or more and 3 g/m² or less.

### (Printed Layer)

The printed layer is a layer on which characters, figures, symbols, other desired patterns, or the like are printed. The method of printing and the printing ink are not limited to particular ones, and known methods of printing and printing inks can be used. Printing inks often used for films used as the base material are often printing inks used for gravure printing, flexographic printing, flatbed offset printing, inkjet recording printing, or the like. Printing inks used for methods combining these methods of printing and a method of curing by active energy rays such as ultraviolet rays (UV), LEDs, and electron beams (EBs), a method of curing by heat, or the like are also used. Depending on the used solvent, they may also be referred to as aqueous inks or organic solvent type inks.

Specific examples thereof include gravure printing inks and flexographic printing inks (gravure printing inks and flexographic printing inks may be referred to as liquid printing inks by some industries), UV curable inks for flatbed offset printing, electron beam curable inks for flatbed offset printing, UV curable inks for inkjet recording printing, and electron beam curable inks for inkjet recording printing.

The laminate of the present invention may further include other films and base materials in addition to the configurations (1) to (10) described above. As the other base materials, porous base materials such as paper, wood, and leather described below can be used in addition to the oriented film, the unoriented film, and the transparent vapor-deposited film described above. An adhesive used when the other base materials are bonded may or may not be the adhesive of the present invention.

The "other layers" may contain known additives and stabilizers such as antistatic agents, easy-adhesion coating agents, plasticizers, lubricants, and antioxidants. The "other layers" may be a film the surface of which has been subjected to corona treatment, plasma treatment, ozone treatment, chemical treatment, solvent treatment, or the like as pre-treatment in order to improve adhesion when laminated with other materials.

### <Packaging Material>

The packaging material of the present invention is made by forming the laminate described above into a bag shape and heat-sealing it to form the packaging material. The packaging material has various aspects such as three-side-seal bags, four-side-seal bags, gusset bags, pillow bags, Goebel-top-type bottomed containers, tetraclassic, Bruck type, tube containers, paper cups, and lidding materials. The packaging material of the present invention may be provided with easy-open treatment or resealable means as appropriate.

The packaging material of the present invention can industrially be used as packaging materials mainly filled with food, detergents, and drugs. Examples of the contents to be filled, for example, as foods, include foods such as confectionery such as rice crackers, beans crackers, nuts, biscuits and cookies, wafers, marshmallows, pies, semifinished cakes, candies, and snacks; staples such as bread, snack noodles, instant noodles, dried noodles, pasta, aseptically packaged rice, rice porridge, porridge, packaged glutinous rice, and cereal foods; processed agricultural products such as pickles, boiled beans, natto, miso, frozen tofu, tofu, nametake mushrooms, konjac, processed wild vegetables, jams, peanut cream, salads, frozen vegetables, and processed potatoes; processed livestock products such as ham, bacon, sausage, processed chicken products, and corned beef; processed marine products such as fish meat ham and sausage, fish paste products, fish paste, nori, tsukudani, dried bonito flakes, salted and fermented fish products, smoked salmon, and spicy cod roe; fruit such as peaches, oranges, pineapples, apples, pears, and cherries; vegetables such as corn, asparagus, mushrooms, onions, carrots, radishes, and potatoes; prepared foods such as frozen prepared foods and chilled prepared foods represented by hamburgers, meatballs, fried seafood, dumplings, and croquettes; dairy products such as butter, margarine, cheese, cream, instant creamy powder, adjusted milk powder for child care; liquid seasonings, retort curry, and pet foods.

As non-food products, the packaging material can also be used as various packaging materials such as cigarettes, disposable body warmers, pharmaceuticals such as infusion packs, liquid laundry detergents, liquid kitchen detergents, liquid bath detergents, liquid bath soaps, liquid shampoos, liquid conditioners, cosmetics such as lotions and emulsions, vacuum insulation materials, and batteries.

### <Method for Separating and Recovering Laminate>

For the laminate and the packaging material using the laminate of the present invention, the laminate can be separated into individual base materials and recovered by processing using an alkali solution, which is currently the most commonly used recycling processing. For example, the laminate can be separated and recovered by a method of recycling including a step of separating the laminate into layers by immersing the laminate in a peeling liquid such as an alkali solution while the laminate is heated and stirred at 20 to 90°C and a step of recovering the separated layers.

The alkali solution used in the method of separation and recovery is preferably an aqueous sodium hydroxide solution, an aqueous potassium hydroxide solution, or the like. The aqueous sodium hydroxide solution or the aqueous potassium hydroxide solution is preferably an aqueous solution with a concentration of 0.5% by mass to 10% by mass and more preferably an aqueous solution with a concentration of 1% by mass to 5% by mass. The pH is preferably 10 or higher.

The alkali solution may contain water-soluble organic solvents. Examples of the water-soluble organic solvents include methyl alcohol, ethyl alcohol, propyl alcohol, isopropyl alcohol, ethylene glycol monomethyl ether (methyl cellosolve), ethylene glycol monoethyl ether (cellosolve), ethylene glycol monobutyl ether (butyl cellosolve), ethylene glycol dibutyl ether, diethylene glycol monomethyl ether (methyl carbitol), diethylene glycol dimethyl ether, diethylene glycol monoethyl ether (carbitol), diethylene glycol diethyl ether (diethyl carbitol), diethylene glycol monobutyl ether (butyl carbitol), diethylene glycol dibutyl ether, triethylene glycol monomethyl ether, triethylene glycol dimethyl ether, tetraethylene glycol dimethyl ether, methylene dimethyl ether (methylal), propylene glycol monobutyl ether, tetrahydrofuran, acetone, diacetone alcohol, acetonylacetone, acetylacetone, ethylene glycol monomethyl ether acetate (methyl cellosolve acetate), diethylene glycol monomethyl ether acetate (methyl carbitol acetate), diethylene glycol monoethyl ether acetate (carbitol acetate), ethyl hydroxyisobutyrate, and ethyl lactate, which can be used alone or in combination.

The content of the water-soluble organic solvents in the alkali solution is preferably 30% by mass to 70% by mass and more preferably 40% by mass to 60% by mass.

The alkali solution may contain non-water-soluble organic solvents. Examples of the non-water-soluble organic solvents include alcohol-based solvents such as n-butanol, 2-butanol, isobutanol, and octanol; aliphatic hydrocarbon-based solvents such as hexane, heptane, and normal paraffin; aromatic hydrocarbon-based solvents such as benzene, toluene, xylene, and alkylbenzenes; halogenated hydrocarbon-based solvents such as methylene chloride, 1-chlorobutane, 2-chlorobutane, 3-chlorobutane, and carbon tetrachloride; ester-based solvents such as methyl acetate, ethyl acetate, and butyl acetate; ketone-based solvents such as methyl isobutyl ketone, methyl ethyl ketone, and cyclohexanone; and ether-based solvents such as ethyl ether and butyl ether. These can be used individually or in combination.

The alkali solution may contain surfactants. Examples of the surfactants include various anionic surfactants, nonionic surfactants, cationic surfactants, and amphoteric surfactants, among which anionic surfactants and nonionic surfactants are preferred.

Examples of the anionic surfactants include alkylbenzene sulfonates, alkyl phenyl sulfonates, alkylnaphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecyl benzene sulfonate, isopropylnaphthalene sulfonate, monobutylphenylphenol monosulfonate, monobutylbiphenyl sulfonate, and dibutylphenylphenol disulfonate.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers. Among these, preferred are polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers.

Examples of other surfactants include silicone-based surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipids, and lysolecithin.

These surfactants can be used individually or mixed together. When the surfactants are added, the amount thereof added is preferably in a range of 0.001 to 2% by mass, more preferably 0.001 to 1.5% by mass, and even more preferably in a range of 0.01 to 1% by mass with respect to the total amount of the alkali solution.

The alkali solution also preferably contains terpene-based compounds. Examples of the terpene-based compounds include terpene-based hydrocarbons such as monoterpenes such as α-pinene, β-pinene, limonene, β-phellandrene, α-terpinene, γ-terpinene, ocimene, myrcene, camphene, terpinolene, silvestrene, sabinene, carene, tricyclene, and fenchene, sesquiterpenes such as longifolene, caryophyllene, bisabolene, santalene, zingiberene, curcumene, cadinene, sesquibenihene, and cedrene, and diterpenes such as camphorene, podocarprene, myrene, phyllocladene, and totarene;
terpene alcohols such as monoterpene alcohols such as β-citronellol, geraniol, nerol, linalool, terpineol, carveol, twill alcohol, pinocampheol, and fenchyl alcohol, sesquiterpene alcohols such as farnesol, nerolidol, cadinol, eudesmol, guaiol, patchouli alcohol, carotol, lanceol, and kessoglycol, and diterpene alcohols such as phytol, sclareol, manool, hinokitiol, ferruginol, and totarol;
terpene aldehydes such as citronellal, citral, cyclocitral, safranal, phellandral, and perillaldehyde; and
terpene ketones such as monoterpene ketones such as tagetone, ionone, irone, carvomenthone, carvotanacetone, piperitenone, thujone, and calone, sesquiterpene ketones such as cyperone, eremophilone, and zerumbone, and diterpene ketones such as sugiol and ketomanoyl oxide.

These may be used individually or in combination. Terpene-based hydrocarbons are preferably used, and limonene is more preferably used.

The content of the terpene-based compounds can be adjusted as appropriate, and as an example, it is preferably 0.1% by mass or more and 90% by mass or less, more preferably 1% by mass or more, and even more preferably 5% by mass or more of the alkali solution. The content of the terpene-based compounds is more preferably 50% by mass or less of the alkali solution.

The laminate is immersed in the alkali solution heated to 20 to 90°C in a processing tank. The method of heating is not limited to a particular method, and any known methods of heating using hot rays, infrared rays, microwaves, and the like can be employed. Ultrasonic vibration may be applied during immersion. For example, a method of attaching an ultrasonic transducer to the processing tank to impart ultrasonic vibration to the alkali solution can be employed.

The alkali solution is preferably stirred during the immersion of the laminate. Examples of the method of stirring include methods of mechanically stirring a dispersion liquid of the laminate housed in the processing tank by a stirring blade, methods of water-jet stirring by a water-jet pump, and methods of bubbling with inert gas such as nitrogen gas or the like. To efficiently delaminate the laminate, these methods may be used in combination.

The time for immersing the laminate in the alkali solution is generally in a range of 2 minutes to 48 hours, depending on the configuration of the laminate. If the immersion time is less than 2 minutes, the layer of the adhesive may not completely peel off from the laminate and partially remain. The number of times of immersion in the alkali solution may be once or several times.

In most cases, in addition to the adhesive, the laminate is provided with a printing ink layer to indicate product names and the like and to impart decorativeness; by immersing the laminate in the alkali solution, the printing ink layer can also be peeled off or dissolved. The laminate may also have foil or vapor-deposited films of metals such as aluminum laminated thereon; in the present invention, the metal foil or vapor-deposited films can also be peeled off or dissolved.

It is presumed that the alkali solution used in the method of separation and recovery acts on the interface between the laminate and the adhesive or the printing ink and significantly reduces its adhesive strength, thereby causing interfacial peeling between the laminate and the adhesive or the printing ink. Normally, coating films after cross-linking of reactive adhesives or the like are hardly dissolved in any solutions; it is presumed that the present invention does not dissolve them but causes interfacial peeling, and thus separation and recovery can be performed efficiently in a short time.

### (Recycled Plastic)

Each of the base materials obtained by separating and recovering the laminate or the packaging material using the two-component curable adhesive of the present invention by the method of separation and recovery can be processed by various known methods of recycled plastic processing to produce recycled plastic.

Alternatively, if there are no other requirements for the hue or the like of the resulting recycled plastic, the laminate or the packaging material using the two-component curable adhesive of the present invention can also be processed as is by various known methods of recycled plastic processing to produce recycled plastic.

As an example of specific aspects, recycled plastic can be obtained by a method of production including a step of crushing a recovered object obtained by separating the laminate of the present invention into each base material or the laminate or the packaging material of the present invention, a step of melting and kneading the crushed film pieces, and a step of pelletizing the melted and kneaded product.

For the crusher for use in crush (pulverization), known crushers may be used, without any particular limitations.

The film pieces after pulverization are physically blended by melting and kneading, solvent cast blending, latex blending, polymer complexing, or the like. In particular, a melting and kneading method is common. Examples of the apparatus for performing kneading include tumblers, Henschel mixers, rotary mixers, super mixers, ribbon tumblers, and V blenders. The film pieces are melted and kneaded by such a kneading apparatus and then pelletized. Single or multi-screw extruders are generally used for melting and kneading and pelletization; the film pieces may be charged as is or charged after being subjected to compression and volume reduction processing under heating or non-heating. Furthermore, apart from these extruders, Banbury mixers, rollers, co-kneaders, blast mills, Brabender plastograph, or the like can also be used, which are operated either in a batch manner or continuously. Alternatively, without performing melting and kneading, a method is also possible in which the film pieces are used as a resin for molding and melted and kneaded in a heating cylinder of a molding machine.

### [Examples]

The following describes the present invention in more detail with reference to specific synthesis examples and examples; the present invention is not limited to these examples. In the following examples, "parts" and "%" represent "parts by mass" and "% by mass," respectively, unless otherwise noted.

### <Synthesis of Polyol>

### (Synthesis Example 1)

Into a polyester reaction vessel equipped with a stirrer, a nitrogen gas introduction tube, a rectifying tube, a moisture separator, and the like, 41.8 parts of diethylene glycol (DEG), 43.2 parts of adipic acid (AA), 15 parts of isophthalic acid (IPA), and 50 ppm of titanium tetraisopropoxide (TTIP) were charged, and the mixture was gradually heated such that the temperature at the upper portion of the rectifying tube would not exceed 100°C under a nitrogen flow to maintain the internal temperature at 230°C. After the acid value fell below a specified value, the reaction was continued for another hour. The pressure was reduced to 30 mmHg, and the reaction was ended at the time of 2 mgKOH/g or less to obtain a polyester polyol A-1.

### (Synthesis Example 2)

After obtaining a polyester polyol as in Synthesis Example 1, 2 parts of trimellitic anhydride were added at 190°C to obtain A-5.

### (Synthesis Example 3 to 11)

Polyester polyols A-2 to A-4 and A-6 to A-11 were obtained in the same manner as in Synthesis Example 1 or Synthesis Example 2 except that the blending amounts were changed as listed in Table 1.

Table 1 lists the raw materials and physical property values of the polyols. Note that the blank columns represent that they were not blended.

**[Table 1]**

| Table 1 Polyester polyol (A) | | A-1 | A-2 | A-3 | A- 4 | A-5 | A- 6 | A-7 | A-8 | A-9 | A-10 | A-11 |
|---|---|---|---|---|---|---|---|---|---|---|---|---|
| Raw mater ials | Diethylene glycol | 41.8 | 42 | 33.5 | 41.8 | 40 | | | 35 | 18 | 12 | |
| | Trimethylol propane | | | 1.9 | 1.9 | 1.9 | 1.9 | 1.9 | 2 | 1.9 | | |
| | Ethylene glycol | | | 4.8 | | | | | | | 12 | |
| | Neopentyl glycol | | | | | | | | 5 | | 15 | |
| | 1,2-Propanediol | | | | | | 30 | | | 18 | | |
| | 1,2-Butanediol | | | | | | | 36 | | | | |
| | 2,4-Diethyl pentanediol | | | | | | | | | | | 50 |
| | Adipic acid | 43.2 | 28 | 29.8 | 56.3 | 28.1 | 43 | 43 | 45 | 50 | 20 | 33 |
| | Isophthalic acid | 15 | 30 | 30 | | 30 | 15 | 15 | 10 | 10 | 25 | 10 |
| | Terephthali c acid | | | | | | | | | | 25 | |
| | Trimellitic anhydride | | | | | 2 | | | | 2 | | |
| | Pyromelliti c anhydride | | | | | | 2 | | | | | |
| | Phthalic anhydride | | | | | | | 2 | | | | |
| | Succinic anhydride | | | | | | | | 2 | | | |
| Number average molecular weight | | 9000 | 3500 | 3500 | 3500 | 3500 | 3500 | 3500 | 4000 | 5000 | 5700 | 3000 |
| Hydroxyl value mgKOH/g | | 12.5 | 32.1 | 40.1 | 40.1 | 35 | 39.7 | 41.2 | 35.3 | 28.1 | 17.5 | 36.5 |
| Acid value mgKOH/g | | 2 | 1.05 | 2.09 | 2.1 | 15 | 15 | 15 | 15 | 15 | 2.16 | 2 |

### <Preparation of Adhesive>

The polyol composition (X) and the polyisocyanate composition (Y) were mixed together with the formulation listed in Table 2 to prepare adhesives of Examples 1 to 10 and Comparative Examples of 1 to 3.

### <Compost Biodegradability Evaluation>

### (Method 1)

A two-component curable adhesive (solid content: 3 g/m²) formulated in any combination of the examples or the comparative examples was applied onto a polyethylene terephthalate film and aged at 50°C for 72 hours to obtain a coating film for biodegradability evaluation. Since the adhesive alone was highly adhesive and could not maintain the shape of a coating film, the adhesive was evaluated as a thin film on the polyethylene terephthalate film.

Compost degradability was measured by a method conforming to JIS K6953-1: 2011.
*Culture temperature: 58°C, culture period: 28 days
*Evaluation criteria:
   A: compost decomposition rate of 40% or more
   B: compost decomposition rate of 30% or more and less than 40%
   C: compost decomposition rate of 20% or more and less than 30%
   D: compost decomposition rate of 10% or more and less than 20% (lower limit for practical use)
   E: compost decomposition rate of less than 10%

### (Method 2)

In the compost biodegradability evaluation method 1, compost degradability was measured for the adhesives of Examples 3 and 5 to 10 in the same manner as in Method 1 except that the polyethylene terephthalate film was replaced with single-side glazed bleached kraft paper (Nippon Paper Industries Co., Ltd, Capital Wrap).

### (Method 3)

In the compost biodegradability evaluation method 1, compost degradability was measured for the adhesives of Example 1 and Examples 3 and 5 to 10 in the same manner as in Method 1 except that the polyethylene terephthalate film was replaced with a biodegradable sealant film: polybutylene succinate film (Mitsubishi Chemical Corporation, BioPBS^{™} FD92).

### <Delamination Evaluation>

A biaxially oriented polypropylene film (manufactured by Toyobo Co., Ltd., P2161 OPP film) and a cast polypropylene film (manufactured by Toyobo Co., Ltd., P1128 CPP film) were coated with a two-component curable adhesive (solid content: 3 g/m²) formulated in any combination of the examples or the comparative examples and laminated on each other to obtain a laminate.

The laminate obtained above was cut to 20 mm × 20 mm to make a test specimen. The test specimen was heated to 70°C, and the test specimen was immersed in a peeling agent and stirred at 400 rpm. After immersion, the test specimen was taken out and washed with ion exchanged water and dried, and the peeling area (%) of the adhesive was examined by coloration with Neocarmine. A case of complete peeling is 100%. The immersion time was set to 3 hours. For the peeling liquid, a mixed solution of 48 parts of water and 50 parts of ethanol with 2 parts of sodium hydroxide dissolved was used.
A (Best): peeling area of 100%
B (Superior): peeling area of less than 90 to 100%
C (Good): peeling area of less than 80 to 90%
D (Acceptable): peeling area of less than 70 to 79%
E (Not acceptable): peeling area of less than 70%

### (Evaluation of Adhesive Strength)

### (Method 1)

A cellophane film (manufactured by Futamura Chemical Co., Ltd.; NATUREFLEX NP 23 µm) and a PBS film (manufactured by Mitsubishi Chemical Corporation; BioPBS film 30 µm) as a sealant film were laminated on each other with a two-component curable adhesive (solid content: 3 g/m²) formulated in any combination of the examples or the comparative examples and aged at 50°C for 72 hours to obtain a laminate.

At an ambient temperature of 25°C, using a tensile tester from Shimadzu Corporation with a peeling speed set at 300 mm/minute, the peak of tensile strength when both ends of a sample for adhesive strength measurement were subjected to pulling measurement was defined as adhesive strength. The unit of the adhesive strength is N/15 mm.

### *Evaluation criteria:

A (Best): adhesive strength of 2.0 N or more
B (Superior): adhesive strength of 1.5 N or more and less than 2.0 N
C (Good): adhesive strength of 1.0 N or more and less than 1.5 N
D (Acceptable): adhesive strength of 0.5 N or more and less than 1.0 N (lower limit for practical use)
E (Not acceptable): adhesive strength of less than 0.5 N (not suitable for practical use)

### (Method 2)

In the adhesive strength evaluation method 1, the adhesive strength of the laminate was measured in the same manner as in Method 1 except that the cellophane film was replaced with single-side glazed bleached kraft paper (Nippon Paper Industries Co., Ltd, Capital Wrap) and lamination was performed with an application amount of the two-component curable adhesive of (solid content: 5 g/m²).

Table 2 lists the results. Note that the blank columns represent that they were not blended.

**[Table 2]**

| Table 2 | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 |
|---|---|---|---|---|---|---|---|---|---|---|---|---|---|---|
| Polyeste r polyol | A-1 | 12.5 | | | | | | | | | | | | |
| | A-2 | | 5 | 5 | | | | | | | | | | |
| | A-3 | | | | 4 | | | | | | | | | |
| | A-4 | | | | | 4 | | | | | | | | |
| | A-5 | | | | | | 4.5 | | | | | | | |
| | A-6 | | | | | | | 4 | | | | | | |
| | A-7 | | | | | | | | 3.8 | | | | | |
| | A-8 | | | | | | | | | 4.5 | | | | |
| | A-9 | | | | | | | | | | 5.5 | | | |
| | A-10 | | | | | | | | | | | 13 | 12 | |
| | A-11 | | | | | | | | | | | | | 5.5 |
| Polyisoc yanate | HDI-TMP | 1 | 1 | 1 | 1 | | 1 | 1 | 1 | 1 | | | | |
| | TDI-TMP | | | | | 1 | | | | | | | | |
| | HDI-nurate | | | | | | | | | | 1 | 1 | | |
| | HDI-Biuret | | | | | | | | | | | | 1 | 1 |
| Additive | Lactide | | | 0.25 | | | | | | | | | | |
| Adhesive composit ion | Content of aromatic ring and aliphatic ring of adhesive composition in adhesive cured coating film (meq/g) | 0.97 | 1.74 | 1.67 | 1.68 | 0.83 | 1.77 | 1.02 | 0.98 | 0.71 | 0.70 | 3.00 | 2.98 | 0.62 |
| | Concentration of urethane + urea group in adhesive cured coating film (meq/g) | 0.25 | 0.57 | 0.57 | 0.69 | 0.70 | 0.62 | 0.68 | 0.71 | 0.62 | 0.52 | 0.33 | 0.33 | 0.66 |
| | Amount of aliphatic polyhydric alcohol having quaternary carbon atom and trivalent or more hydroxy groups in total mass of adhesive (mmol/a) | 0.10 | 0.22 | 0.21 | 0.40 | 0.41 | 0.37 | 0.41 | 0.41 | 0.39 | 0.14 | 0.00 | 0.00 | 0.00 |
| Evaluati on results | Compost biodegradability evaluation method 1 | C | C | B | C | B | B | B | B | B | B | E | E | E |
| | Compost biodegradability evaluation method 2 | Undone | Undone | B | Undone | B | B | B | B | B | B | Undone | Undone | Undone |
| | Compost biodegradability evaluation method 3 | Undone | Undone | B | Undone | B | B | B | B | B | B | Undone | Undone | Undone |
| | Delamination evaluation | B | C | B | C | B | A | A | A | A | B | D | D | D |
| | Adhesive strength evaluation method 1 | B | A | B | A | C | A | B | B | B | B | A | A | A |
| | Adhesive strength evaluation method 2 | Paper cohesive failure | Paper cohesive failure | Paper cohesive failure | Paper cohesive failure | Paper cohesive failure | Paper cohesive failure | Paper cohesive failure | Paper cohesive failure | Paper cohesive failure | Paper cohesive failure | Paper cohesive failure | Paper cohesive failure | Paper cohesive failure |

The abbreviations in Table 2 are as follows.
HDI-TMP: Sumidur HT manufactured by Covestro (a trimethylolpropane (TMP) adduct form of hexamethylene diisocyanate (HDI). Trimethylolpropane is an aliphatic alcohol having a quaternary carbon atom and trivalent or more hydroxy groups.)
TDI-TMP: Desmodur L-75 manufactured by Covestro (a trimethylolpropane (TMP) adduct form of toluene diisocyanate (TDI). Trimethylolpropane is an aliphatic alcohol having a quaternary carbon atom and trivalent or more hydroxy groups.)
HDI-nurate: Sumidur N3300 manufactured by Covestro (a nurate form of hexamethylene diisocyanate (HDI))
HDI-Biuret: Duranate 24A-100 manufactured by Asahi Kasei Corporation (a biuret form of hexamethylene diisocyanate (HDI))

Consequently, the two-component curable adhesives of Examples 1 to 10 achieved excellent compost biodegradability and delamination properties while maintaining practically sufficient adhesive strength. On the other hand, Comparative Examples 1 to 3, which are examples in which neither the polyester polyol compound (A) nor the polyisocyanate compound (B) is a reaction product of an aliphatic alcohol having a quaternary carbon atom and having trivalent or more hydroxy groups, had inferior compost biodegradability and delamination properties.

## Claims

1. A two-component curable adhesive comprising:
a polyol composition (X) containing a polyester polyol compound (A); and
a polyisocyanate composition (Y) containing a polyisocyanate compound (B),
the polyester polyol compound (A) having a number average molecular weight in a range of 500 to 20,000, and
either or both of the polyester polyol compound (A) and the polyisocyanate compound (B) being a reaction product of an aliphatic alcohol having a quaternary carbon atom and having trivalent or more hydroxy groups.

2. The two-component curable adhesive according to claim 1, wherein the polyester polyol compound (A) is acid-modified.

3. The two-component curable adhesive according to claim 1, wherein the polyisocyanate compound (B) is the reaction product of an aliphatic alcohol having a quaternary carbon atom and having trivalent or more hydroxy groups.

4. The two-component curable adhesive according to claim 1, wherein the polyester polyol compound (A) is a reaction product obtained by using diethylene glycol or a 1,2-alkanediol as part of a raw material.

5. The two-component curable adhesive according to claim 1, wherein an amount of the aliphatic alcohol having a quaternary carbon atom and having trivalent or more hydroxy groups in a total mass of the two-component curable adhesive is 0.05 to 1.0 mmol/g.

6. The two-component curable adhesive according to claim 1, wherein a content of an aromatic ring and/or aliphatic ring in a total mass of the two-component curable adhesive is 0.63 to 2.8 meq/g.

7. The two-component curable adhesive according to claim 1, wherein the two-component curable adhesive contains a dehydrated condensate (C) of hydroxycarboxylic acid.

8. A laminate comprising:
a first base material;
a second base material; and
an adhesive layer disposed between the first base material and the second base material,
the adhesive layer being a cured coating film of the two-component curable adhesive according to any one of claims 1 to 7.

9. A packaging material comprising the laminate according to claim 8.

10. A method for recycling a laminate, the method comprising:
a step of immersing a laminate including a first base material, a second base material, and an adhesive layer disposed between the first base material and the second base material, the adhesive layer being a cured coating film of the two-component curable adhesive according to any one of claims 1 to 7 in a peeling liquid to separate the laminate into layers; and
a step of recovering the separated layers.
